# EUROPEAN PATENT SPECIFICATION

(11) **EP 0 989 316 B1**
(45) Date of publication and mention of the grant of the patent: **22.04.2009**
(21) Application number: 98919608.4
(22) Date of filing: 15.05.1998
(51) Int. Cl.: F16D 1/02, F16H 1/28, B21D 22/30, B21K 1/30

(54) **TORQUE TRANSMITTING MEMBER IN AUTOMOTIVE TRANSMISSION, METHOD FOR FORMING SPLINE TEETH, AND APPARATUS FOR FORMING THE SAME**
DREHMOMENTTRAGENDES ELEMENT IN EINEM KRAFTFAHRZEUGGETRIEBE, VERFAHREN ZUR HERSTELLUNG VON ZÄNNEN UND VORRICHTUNG ZUM FORMEN DERSELBEN
ELEMENT DE TRANSMISSION DE COUPLE DE TRANSMISSION D'AUTOMOBILE, ET PROCEDE ET APPAREIL POUR FORMER DES RAINURES CONSTITUANT DES DENTS

(30) Priority: 13.06.1997 JP 15707997
(43) Date of publication of application: 29.03.2000
(73) Proprietor: Unipres Corporation, Fuji-shi, Shizuoka 416-8510 (JP)
(72) Inventor: IMOTO, Toshihiro, Fuji-shi Shizuoka 416-8510 (JP); NAKAMURA, Takeshi, Fuji-shi Shizuoka 416-8510 (JP)
(74) Representative: Piésold, Alexander James
(86) International application number: PCT/JP1998/002144
(87) International publication number: WO 1998/057071

(56) References cited:
- JP-A- 5 318 188
- JP-A- 8 300 084
- JP-A- 60 084 443
- JP-A- 62 168 626
- JP-U- 63 011 126

## Description

### TECHNICAL FIELD

The present invention relates to a method and the equipment for forming spline teeth on the outer circumference of a cylindrical boss integrally formed at and protruding from a disk plate.

### BACKGROUND ART

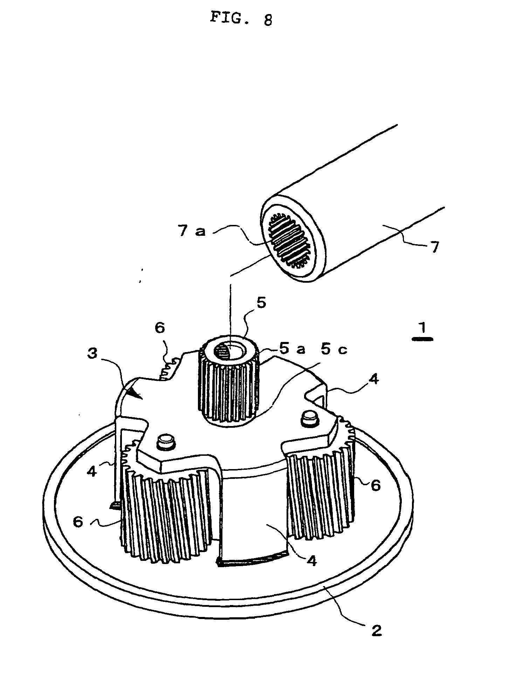

FIG. 8 shows a prior art carrier plate assembly used for an automatic transmission for an automobile. In the same drawing, a carrier plate assembly 1 consists of a ring-like base plate 2 and a carrier plate 3 integrally formed on the base plate 2 by welding.

The carrier plate 3 is a press-formed body, in which wall portions 4 connected to the base plate 2 are formed to collapse at three points around its circumference, and a boss portion 5 is formed to stand upright at the center thereof.

In addition, three planetary gears 6 are supported, by bearings, between the surrounding portion of the carrier plate 3 between the respective wall portions 4 and the base 2, and the inside and outside of the respective planetary gears 6 are engaged with the sun gear and internal gears which are not illustrated herein.

Also, since the boss portion 5 is connected to the axial end of an output shaft 7, spline teeth 5a which are engaged with inner spline grooves 7a on the inner circumference of an engaging hole of the output shaft 7 are formed on the outer circumferential surface.

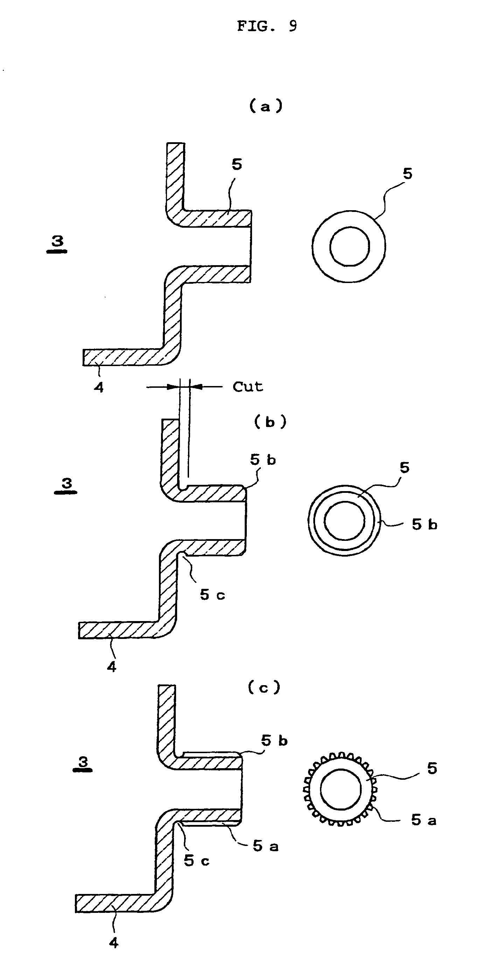

A cutting and machining method illustrated in FIG. 9 has been utilized in prior arts as a method for forming the spline teeth 5a.

First, in the initial process, as shown in (a), a press-worked part is produced, in which wall portions 4 are press-formed at three points on the circumference, and a boss portion 5 is press-formed at its center position. As shown in (b), a tapered part 5b and a grooved part 5c are produced thereon by tapering the tip end thereof and grooving the root thereof by cutting. After that, a cutter of a shaving machine is caused to reciprocate in the axial direction of the boss portion 5 whenever the carrier plate 3 stops while intermittently rotating the carrier plate 3 at an appointed degree of angle, whereby, as shown in (c), spline teeth 5a are formed.

However, there exist the following problems and shortcomings in the prior art spline teeth forming method described above.

First, since there are a number of processing steps in order to form spline teeth by cutting, production costs are expensive, wherein different processes consisting of a press-working process and a cutting process are indispensable. Therefore, automatic continuous production could not be carried out.

Further, a grooving process is requisite at the root part of the boss portion in order to secure relief for a cutter which produces spline teeth, whereby the root of the boss portion 5 of the carrier plate is unavoidably made thin. Stress is likely to be concentrated at this part when transmitting torque, whereby the structure is unavoidably made brittle.

Still further, since the abovementioned machining is to shave surfaces, surfaces machined and hardened by press-working, which is a pre-process of shaving the surfaces, and a material flow are discontinued. Therefore, the hardness of a part which was shaved is made low, and the surface strength of the carrier plate boss portion is lowered, whereby such a shortcoming is produced by which a finished part is likely to be easily worn.

The invention was developed in order to solve the above-mentioned problems and shortcomings, and it is therefore an object of the invention to provide a torque transmitting member for an automobile, which has a high surface hardness and spline teeth, a method for forming spline teeth, and equipment for forming spline teeth, in which the same method is utilized.

### DISCLOSURE OF INVENTION

A method for forming spline teeth according to the invention is a method for forming spline teeth, by which spline teeth are formed on the outer circumferential surface of a cylindrical boss of a workpiece in which the cylindrical boss is integrally formed at the center of a metallic disk plate so as to protrude therefrom, wherein, with respect to a cylindrical boss in which teeth for forming spline teeth are formed, and a boss guide mandrel, which is disposed at the center of the die, a disk plate being a workpiece, in which the boss is disposed so as to be fitted into the mandrel, is pressed down with one shot by a punch brought into contact with the rear side of the boss, and the boss is fitted inside a clearance between the die and the mandrel, wherein spline teeth are drawn and formed on the outer circumferential surface of the boss in the axial direction from the tip end side of the boss; the drawn material is concentrated at the root portion of the boss by a material flow; and minute build-up portions being a segment of a circle viewed along the axis of the boss, which have the maximum hardness on the outer circumferential surface, are formed at a position between ridges of the spline teeth.

Thereby, the outer layer portion of the boss is drawn in the axial direction by causing the boss of a workpiece to be thrust in the die, and teeth are formed while causing the material to flow toward the root portion side of the boss. Then, spline teeth can be completed by one shot of the punch.

In addition, since minute build-up portions being a segment of a circle in the plan view, which have the maximum hardness on the outer circumferential surface at a position between ridges of the spline teeth, are formed by drawing and forming teeth while causing the material of the surface layer portion of the boss to flow toward the root portion side, strength of the boss root portion can be secured in the course of forming spline teeth.

Further, an equipment for forming spline teeth of the invention is provided with a cylindrical die in which teeth for forming spline teeth are formed; a boss guide mandrel disposed and fixed at the center of the boss; and a punch which is elevated along the mandrel and causes the boss fitted in the mandrel to be fitted into a clearance between the die and the mandrel;
and is further provided with a die, in which teeth for forming spline teeth are, constructed so that, since the outer layer portion of the boss is drawn in the axial direction by pressing the boss projected at the front side at the center of the disk plate, which is a workpiece, into the die with one shot of the punch brought into contact with the rear side of the boss, the thickness from the tip end of the boss to the root thereof can be made uniform; and minute build-up portions being a segment of a circle viewed along the axis of the boss, which have the maximum hardness, are formed on the outer circumferential surface at a position between ridges of the spline teeth at the corresponding root portion in order to form teeth on the boss. Thereby, the mandrel functions as an initial positioning member of a workpiece, and as a guide when pressing the boss into the die, and operates as a forming surface inside the boss. The die operates so as to form teeth on the boss by forming minute build-up portions being a segment of a circle in the plan view, which have the maximum hardness, on the outer circumferential surface at a position between ridges of spline teeth at the root portion of the boss.

A torque transmitting member for an automobile of the invention is such that a cylindrical boss portion is integrally formed at the center of a metallic disk plate so as to protrude therefrom, and spline teeth are formed on the outer circumference of the boss portion, wherein the spline teeth are formed by drawing the outer layer portion of the boss in the axial direction from the tip end of the boss while pressing down a punch brought into contact with the rear side of the boss portion, and fillet resulting from a material flow of the boss portion is concentrated at the root of the boss portion, whereby minute build-up portions being a segment of a circle viewed along the axis of the boss, which have the maximum hardness on the outer circumferential surface at a position between ridges of the spline teeth, are formed.

The torque transmitting member may be a carrier plate for automatic transmission, in which wall portions welded at and fixed at a base plate are provided at a plurality of points in the circumferential direction.

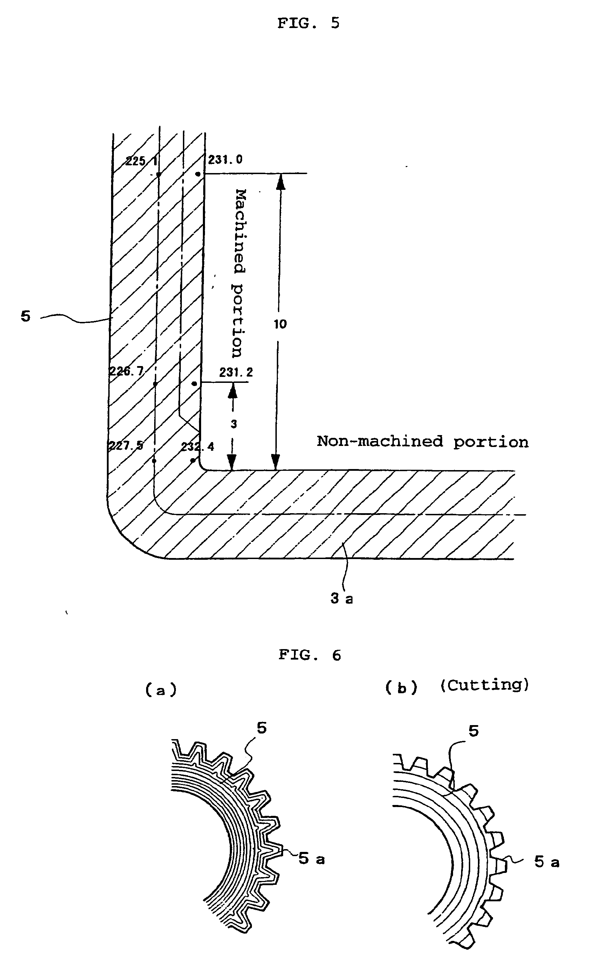

The spline teeth formed on the outer circumference of the boss are drawn in the axial direction from the tip end of the boss to the root side thereof when forming them. The material is caused to flow in the axial direction by a drawing process. However, as shown in FIG. 6 (a), the texture in the cross section is in the form that a plurality of layers continuous in the circumferential direction are laminated, and the surface hardness is harder than in the prior art teeth (Refer to FIG. 6(b)) in which a plurality of layers continuous in the circumferential direction are separated by cutting. Further, the drawn material is collected at the root portion of the boss, and as shown in FIG. 5, the hardness at the root portion side becomes a maximum as shown in FIG.5, and at the same time, sufficient thickness can be secured at the root portion of the boss. That is, the thickness at the root portion of the boss portion where stress is likely to be concentrated when transmitting torque can be sufficiently secured, and at the same time, the strength of the boss portion can be increased.

### BRIEF DESCRIPTION OF DRAWINGS

FIG. 1 is a cross-sectional view showing the entire structure of one preferred embodiment of spline teeth forming equipment to which the present invention is applied;
FIG. 2 is an enlarged cross-sectional view of part A in FIG.1;
FIG. 3(a) is a perspective view of a blank before press-working; FIG. 3(b) is a perspective view showing a press-worked carrier plate; FIG. 3(c) is a cross-sectional view of the same carrier plate; FIG. 3(d) is a perspective view of a carrier plate on which spline teeth are formed; and FIG. 3 (e) is a cross-sectional view of the same carrier plate.
FIG. 4 is an enlarged perspective view around the root of the boss portion;
FIG. 5 is an exemplary view showing the results of comparison in hardness between a machined portion and a workpiece;
FIG. 6(a) is an exemplary view showing a material flow in the circumferential direction of the boss portion according to the invention; and FIG. 6(b) is an exemplary view showing a material flow in the circumferential direction of the boss portion according to a prior art cutting;
FIG. 7 is a partial disassembled and perspective view of a part of an automobile transmission including a carrier plate to which the invention is applicable;
FIG. 8 is a partial disassembled and perspective view of an automobile transmission including a prior art carrier plate; and
FIG. 9 is a view showing a cutting method of spline teeth according to prior arts.

### PREFFERED EMBODIMENTS OF THE INVENTION

Hereinafter, a description is given of a preferred embodiment of the invention with reference to the accompanying drawings. In addition, parts which are identical to those in the prior art technology are given the same reference numbers while different parts are given different reference numbers.

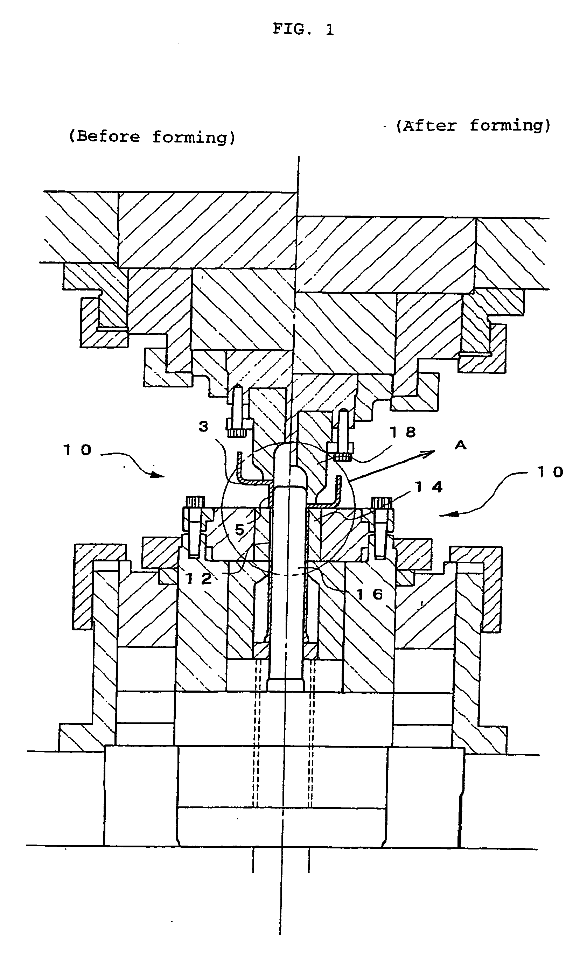

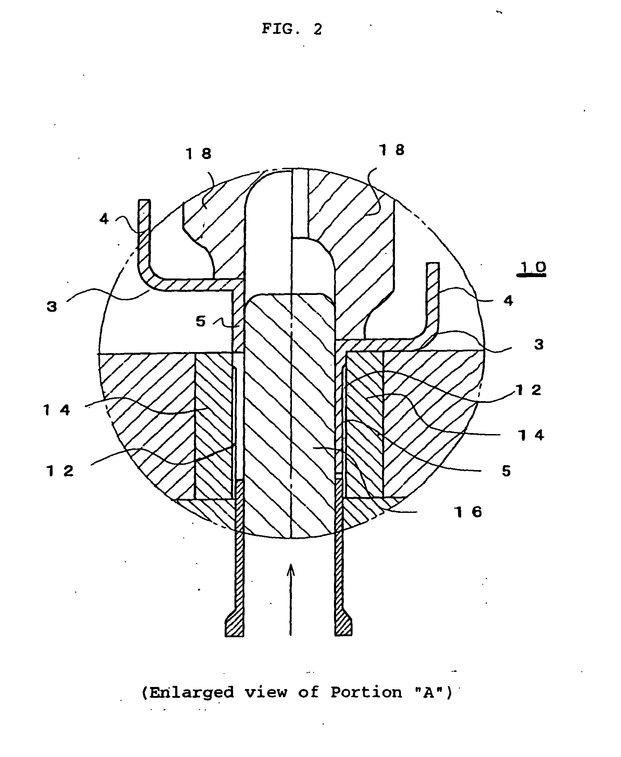

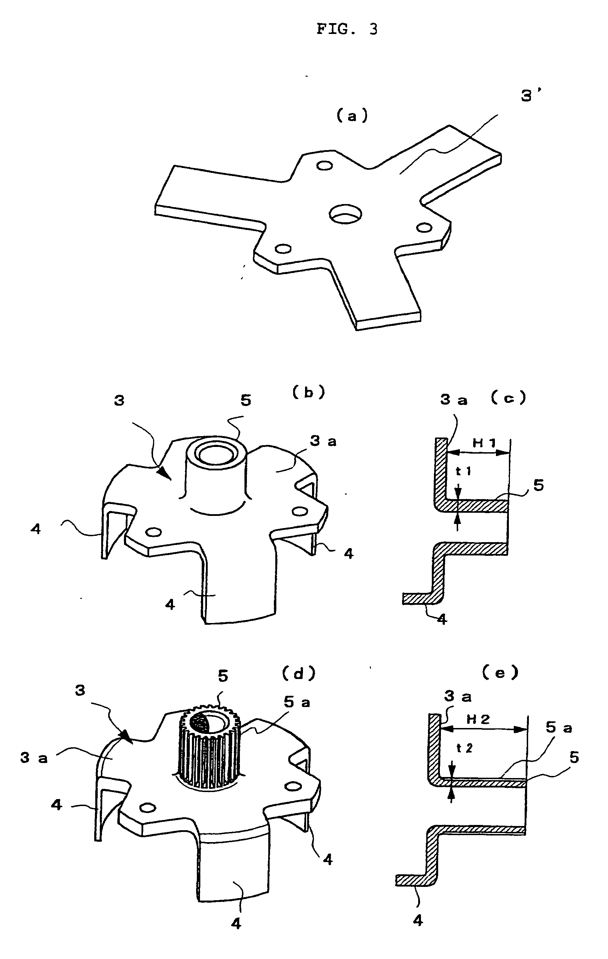

FIG. 1 is a view showing the entire structure of spline teeth forming equipment to which the invention is applied, FIG. 2 shows the major parts of the structure by using a perspective view and cross-sectional view, and FIG. 3 (a) through (e) show changes in the shape of a carrier plate which is a workpiece in respective press processes by using perspective views and cross-sectional views.

First, in FIG. 3 (a), a metallic blank 3' which is blank-cut to a developed view of a carrier plate 3 is provided with wall portions 4 formed so as to drop and a cylindrical boss 5 formed to be erect as shown in FIG. 3(b) and (c) via various kinds of press-working process thereafter. The boss portion 5 is caused to protrude from the front side at the center portion of a plate-like disk plate 3a, wherein the wall portions 4 are caused to protrude downward at the rear side of the circumferential edge of the disk plate 3a.

Thereafter, the carrier plate 3 are set at forming equipment 10 shown in FIG. 1 and FIG. 2. Also, in FIG. 1 and FIG. 2, the left side of the drawing paper shows a state before forming, and the right side thereof shows a state after forming.

Main parts of the forming equipment 10 is provided with a cylindrical die 14 on which teeth 12 for forming spline teeth are formed around its inner circumferential portion, a mandrel 16 disposed and fixed concentrically on the inner circumferential portion of the die 14, whose tip end is caused to protrude onto the upper part of the die 14, and a punch 18 for pressing a carrier plate 3, which is a workpiece on the upper part of the die 14, down to the inside of the die 14.

The inner diameter of the die 14, that is, the diameter between the teeth bottom of teeth 12 is equal to or slightly smaller than the outer diameter of the boss portion 5, and the height of the teeth 12 is set to a dimension within the thickness of the boss portion 5.

Further, the tip end of the punch 18 is formed to be inner cylindrical so as to be idly fitted to the mandrel 16. Also, the outer diameter of the mandrel 16 is equal to the inner diameter of the boss portion 5. The boss portion 5 is fitted into the upper protruding end, and the tip end of the boss portion 5 is opposed to the tip end of the die 14, whereby a forming preparation of spline teeth is then completed.

From this state, the punch 18 is caused to drop and is brought into contact with the rear side of the boss portion 5, and by pressing the punch 18 down, the boss portion 5 is fitted into the clearance between the mandrel 16 and the die 14, whereby spline teeth 5a are formed on the outer circumference of the boss portion 5. That is, when the boss portion 5 is caused to drop along the mandrel 16, the outer layer portion of the boss portion 5 is drawn by the teeth 12 in the axial direction to form spline teeth 5a. At this time, the boss portion 5 is elongated in the axial direction due to a material flow, wherein the initial height H1 before machining as shown in FIG. 3(a) and (c) becomes a higher value H2 than the initial height after the machining as shown in FIG. (d) and (e). However, the inner diameter thereof still remains unchanged at the initial diameter by the mandrel 16. The thickness t2 after drawing and forming the boss portion 5 is equal to or slightly smaller than the thickness t1 before forming.

Further, the direction of flowing of the material resulting from a drawing and forming process is a direction from the tip end of the boss portion 5 toward the root side of the boss portion 5, and the reinforcement is concentrated here. However, the boss portion 5 extends in the axial direction, and the boss portion 5 from the tip end to the root becomes uniform in thickness.

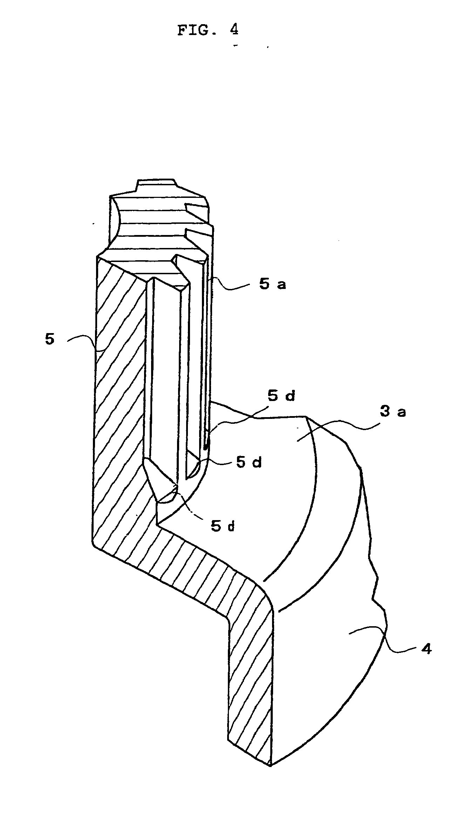

In particular, as shown in FIG. 4, the drawn material forms minute build-up portions 5d, being a segment of a circle in the plan view, which has a high hardness, on the outer circumferential surface at a position between a ridge and a ridge of the spline teeth 5a at the root of the boss portion 5.

Still further, after forming, the punch 18 is elevated. Subsequently, as shown in the right half of FIG. 2, a knock-out 20 is elevated to cause the carrier plate 3, on which spline teeth 5a are formed, to be thrust up and separated from the mandrel 16. Herein, one forming cycle is completed.

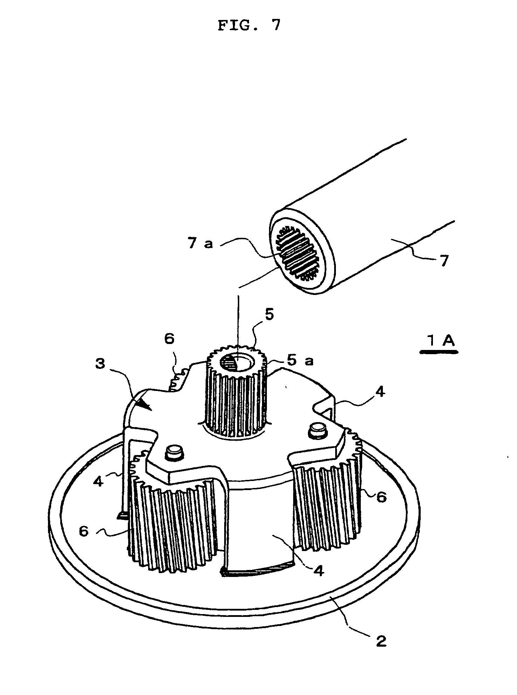

Thereafter, an opening, etc., which pivotally supports a planetary gear 6, is formed, and appointed gears are assembled to be integrated altogether, wherein by welding them to the base plate 2, a carrier plate assembly 1A shown in FIG. 7 is obtained.

FIG. 5 shows hardness (Vickers hardness) at respective points on the section cut off in the longitudinal direction at ridge portions of teeth of the boss portion 5 obtained by the abovementioned forming process. The hardness in the drawing shows the hardness at a depth of 0.05cm from the respective surfaces and the hardness at the center of the thickness. The hardness on the drawing surface, that is, at the spline teeth portion 5a of the boss portion is generally higher than the hardness at non-machined or non-drawn portions, and the hardness at the outside of the root portion of the boss portion 5 shows the maximum value. An increase in strength can be confirmed.

Further, FIG. 6 exemplarily shows a flow material in the circumferential direction of the boss portion in a machined state. A cross section of the boss portion according to a method of the invention shows a flow of a material compressed toward the center of the diameter as shown in FIG. 6(a). However, as shown in FIG. 6(b), in the prior art cutting, teeth are formed in the form of separating the material flow. As the result of a comparison, it can be found that the hardness of the teeth can be increased by the method according to the invention.

Also, in the above preferred embodiment, a description was given of the case where spline teeth are formed on the outer circumference of the boss portion of a carrier plate. However, the invention is widely applicable to other torque transmitting members, for constituting an automobile transmission, in which spline grooves are formed on the outer circumference of the cylindrical boss portion integrally formed at a disk plate.

### INDUSTRIAL APPLICABILITY

As has been made clear on the basis of the above description, with a torque transmitting member in an automobile transmission according to the invention, the surface hardness of spline teeth on the outer circumferential surface of the boss portion is harder than the hardness of non-machined surfaces, and the hardness becomes a maximum at the root side of the boss portion where stress is likely to be accumulated when transmitting a torque. In addition, since the thickness of the root of the boss portion can be sufficiently secured, the strength of the boss portion is high in comparison with the prior arts, whereby it is possible to prevent, in advance, such problems as being breakage at the tooth portion.

Furthermore, with a method according to a spline teeth forming method of the invention, the boss portion is drawn in the axial direction after it is inserted into a clearance between a die and a mandrel, and teeth can be drawn and formed while the surface material of the boss portion is caused to flow. Therefore, since spline teeth can be completed by only a one-shot punching operation, the machining process can be completed with only one process in comparison with prior art cutting, and continuous forming can be carried out by a thorough press-working process from coil materials. The machining cost can be remarkably decreased.

Further, with spline teeth forming equipment according to the invention, since initial position of workpieces can be secured by a mandrel, there are other advantages such as, for example, high machining accuracy, etc.

## Claims

1. A method for forming spline teeth on the outer circumferential surface of a cylindrical boss (5) of a workpiece in which the cylindrical boss is integrally formed at the center of a metallic disk plate (3a) so as to protrude therefrom,
wherein, with respect to a cylindrical die (14) in which teeth (12) for drawing and forming spline teeth (5a) are formed, a boss guide mandrel (16) is disposed at the center of said die, the boss is fitted into a clearance between the die and the mandrel by pressing a disk plate (3a) of a workpiece disposed so that the boss is fitted into the mandrel, with a one shot pressing process by a punch (18) brought into contact with the rear side of said boss; spline teeth are drawn and formed on the outer circumferential surface of the boss in the axial direction from the tip end side of the boss; and minute build-up portions (5d), being a segment of a circle when viewed along the axis of the boss, which have the maximum hardness on the outer circumferential surface at a position between ridges of the spline teeth, are formed by concentrating the drawn material to the root portion of said boss by a material flow.

2. Equipment for forming spline teeth, comprising; a cylindrical die (14) in which teeth (12) for drawing and forming spline teeth (5a) are formed; a boss guide mandrel (16) disposed at and fixed at the center of said die; and a punch (18) for causing a boss (5) fitted into said mandrel to be fitted into a clearance between the die and the mandrel;
wherein, the equipment is arranged such that by causing a boss projected to the front side at the center of a disk plate (3a) to be thrust in said die, with a one-shot press of said punch brought into contact with the rear side of said boss, the outer layer portion of said boss is drawn in the axial direction to make the thickness from said boss tip end to said boss root uniform, and at the same time,
the cylindrical die, in which teeth for forming spline teeth are formed, forms teeth on said boss by causing the material to flow toward the root portion side of said boss in order to collect it, and form minute build-up portions (5d), being a segment of a circle when viewed along the axis of the boss, which have the maximum hardness on the outer circumferential surface at a position between ridges of the spline teeth of said root portion.

## Patentansprüche

1. Verfahren zum Ausbilden einer Verzahnung auf der Außenumfangsfläche eines zylindrischen Vorsprungs (5) eines Werkstücks, wobei der zylindrische Vorsprung einstückig an der Mitte eines metallischen Scheibenblatts (3a) ausgebildet ist, um von diesem vorzustehen,
wobei, in Bezug auf eine zylindrische Pressform (14), in der die Zähne (12) zum Ziehen und Formen der Verzahnung (5a) ausgebildet werden,
ein Vorsprungsführungsdorn (16) an der Mitte dieser Pressform angeordnet ist,
der Vorsprung in einen Zwischenraum zwischen der Pressform und dem Dorn eingepasst ist, indem ein Scheibenblatt (3a) eines Werkstücks, das so angeordnet ist, dass der Vorsprung in den Dorn eingepasst wird, mit einem Einmal-Druckvorgang mittels einem Presswerkzeug (18), das mit der Rückseite des Vorsprungs in Kontakt gebracht wird, gepresst wird,
die Verzahnung auf der Außenumfangsfläche des Vorsprungs in der axialen Richtung von der spitzen Endseite des Vorsprungs gezogen und geformt wird, und
winzige Aufbaubereiche (5d), die, betrachtet entlang der Achse des Vorsprungs, ein Segment eines Kreises sind, welche die maximale Härte auf der Außenumfangsfläche an einer Position zwischen Graten der Verzahnung aufweisen, durch Konzentration des gezogenen Materials am Fußbereich des Vorsprungs durch einen Materialfluss ausgebildet sind.

2. Vorrichtung zum Ausbilden einer Verzahnung, umfassend:
eine zylindrische Pressform (14), in der Zähne (12) zum Ziehen und Formen der Verzahnung (5a) ausgebildet werden;
ein Vorsprungsführungsdorn (16), der an der Mitte der Pressform angeordnet und befestigt ist; und
ein Presswerkzeug (18), damit ein Vorsprung (5), der in den Dorn eingepasst ist, in einen Zwischenraum zwischen der Pressform und dem Dorn eingepasst werden kann;
wobei die Vorrichtung so angeordnet ist, dass **dadurch**, dass ein Vorsprung, der zur Vorderseite an der Mitte eines Scheibenblatts (3a) vorsteht, mittels eines Einmal-Druckvorgangs des Presswerkzeugs, das mit der Rückseite des Vorsprungs in Kontakt gebracht wird, in die Pressform gedrängt wird, der Außenschichtbereich des Vorsprungs in der axialen Richtung gezogen wird, um die Dicke vom spitzen Ende des Vorsprungs zum Fuß des Vorsprungs einheitlich zu machen,
und gleichzeitig die zylindrische Pressform, in der die Zähne zum Formen der Verzahnung ausgebildet werden, Zähne auf dem Vorsprung ausbildet, indem veranlasst wird, dass Material in Richtung zur Fußbereichseite des Vorsprungs fließt, um dieses anzusammeln, und
winzige Aufbaubereiche (5d) ausbildet, die, betrachtet entlang der Achse des Vorsprungs, ein Segment eines Kreises sind, welche die maximale Härte auf der Außenumfangsfläche an einer Position zwischen Graten der Verzahnung des Fußbereichs aufweisen.

## Revendications

1. Procédé de formation de dents de nervure à la surface circonférentielle extérieure d'un bossage (5) cylindrique d'une pièce, dans lequel le bossage cylindrique fait partie intégrante du centre d'une plaque (3) métallique en forme de disque en en faisant saillie,
dans lequel, par rapport à une matrice (14) cylindrique dans laquelle des dents (12) pour emboutir et former des nervures (5a) sont formées, un mandrin (16) de guidage de bossage est disposé au centre de la matrice, le bossage est adapté dans un jeu entre la matrice et le mandrin en pressant un plateau (3a), formant disque, d'une pièce disposée de façon à ce que le bossage soit adapté dans le mandrin par une opération de pressage d'un seul coup par un poinçon (18) amené en contact avec le côté arrière du bossage; des dents de nervure sont embouties et formées sur la surface circonférentielle extérieure du bossage dans la direction axiale à partir du côté d'extrémité de pointe du bossage; et des parties (5d) minuscules d'accumulation, qui sont un segment d'un cercle tel que vu le long de l'axe du bossage et qui ont la dureté maximum sur la surface circonférentielle extérieure en une position entre des rainures des nervures, sont formées par concentration de la matière emboutie vers la partie de la racine du bossage par un fluage de matière.

2. Equipement pour former des dents de nervure, comprenant : une matrice (14) cylindrique dans laquelle des dents (12) pour emboutir et former des dents (5a) de nervure sont formées ; un mandrin (16) de guidage de bossage disposé au centre de la matrice et y étant fixé ; et un poinçon (18) pour faire qu'un bossage (5) adapté dans le mandrin soit adapté dans un jeu entre la matrice et le mandrin ;
dans lequel l'équipement est tel qu'en faisant qu'un bossage projeté vers le côté avant au centre d'un plateau (3a) en forme de disque soit poussé dans la matrice, avec une pression d'un seul coup du poinçon amené en contact avec le côté arrière du bossage, la partie de couche extérieure du bossage est emboutie dans la direction axiale pour rendre uniforme l'épaisseur de l'extrémité de pointe du bossage à la racine du bossage et en même temps,
la matrice cylindrique, dans laquelle des dents pour former des dents de nervure sont formées, forme des dents sur le bossage en faisant que la matière flue vers le côté de la partie de la racine du bossage afin de la rassembler, et forme des parties (5d) minuscules d'accumulation, qui sont un segment d'un cercle tel que vu le long de l'axe du bossage et qui ont la dureté maximum sur la surface circonférentielle extérieure en une position entre des rainures des dents de nervure de la partie de racine.
